(19) Europäisches Patentamt / European Patent Office / Office européen des brevets

(11) **EP 4 693 925 A1**

(12) **EUROPEAN PATENT APPLICATION**
published in accordance with Art. 153(4) EPC

(43) Date of publication:
**11.02.2026 Bulletin 2026/07**

(21) Application number: **23933842.9**

(22) Date of filing: **27.11.2023**

(51) International Patent Classification (IPC):
**H04B 7/0456** (2017.01)

(52) Cooperative Patent Classification (CPC):
**H04B 7/0417; H04B 7/0456**

(86) International application number:
**PCT/CN2023/134207**

(87) International publication number:
**WO 2024/216976 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.04.2023 CN 202310435424**

(71) Applicant: **ZTE Corporation**
**Shenzhen, Guangdong 518057 (CN)**

(72) Inventors:
• **YU, Hongkang**
  **Shenzhen, Guangdong 518057 (CN)**
• **YANG, Jun**
  **Shenzhen, Guangdong 518057 (CN)**
• **CHEN, Yijian**
  **Shenzhen, Guangdong 518057 (CN)**
• **ZHANG, Shujuan**
  **Shenzhen, Guangdong 518057 (CN)**
• **JIAN, Mengnan**
  **Shenzhen, Guangdong 518057 (CN)**
• **LU, Zhaohua**
  **Shenzhen, Guangdong 518057 (CN)**

(74) Representative: **Aipex B.V.**
**Vestdijk 51**
**5611 CA Eindhoven (NL)**

(54) **CHANNEL INFORMATION FEEDBACK METHOD, ELECTRONIC DEVICE, AND STORAGE MEDIUM**

(57) Provided are a channel information feedback method, an electronic device, and a storage medium. The channel information feedback method includes: determining a measurement result of channel state information according to a measured reference signal; determining a codebook, where the codebook includes at least one codeword; determining a codeword in the codebook according to the measurement result; and feeding back indication information of the codeword, where the codeword is composed of basic codeword blocks, and at least one of the basic codeword blocks is represented as follows:

$$\tilde{\mathbf{v}} = \begin{bmatrix} \alpha_0 \mathbf{v}_0 \\ \alpha_1 \mathbf{v}_1 \\ \vdots \\ \alpha_{K-1} \mathbf{v}_{K-1} \end{bmatrix}.$$

In the above formula, a coefficient $\alpha_k$ is a complex scalar, a sub-vector $\mathbf{v}_k$ is a complex vector, and $k \in \{0,1,...,K-1\}$; $K$ is an integer greater than 1; and the indication information includes at least sub-vector indication information indicating the sub-vector $\mathbf{v}_k$.

**FIG. 2**

# EP 4 693 925 A1

**Description**

TECHNICAL FIELD

The present application relates to the field of radio communication technology, for example, a channel information feedback method, an electronic device, and a storage medium.

BACKGROUND

In the wireless communication system, multiple antennas are generally configured at a transmitting end and a receiving end to form a multiple-input and multiple-output (MIMO) system, and space-division multiplexing technology is used for increasing transmission rates. To ensure performance, the transmitting end needs to rely on the channel information fed back by the receiving end for precoding. Generally, for the single-user MIMO system, the transmitting end needs to acquire the feature vector information of the channel matrix; in the multi-user MIMO system, the transmitting end needs more accurate channel information.

In the wireless communication system, such as the standard specifications of the 4th generation mobile communication technology Long-Term Evolution (4G LTE) and 5G New Radio (NR), the acquisition of the channel information is mainly based on codebook feedback, and the accuracy of acquiring the channel information depends significantly on the design of the codebook. The basic principle is briefly introduced as follows: using single-stream transmission as an example, assuming that the feedback channel capacity is $B$ bps/Hz, the number of available codewords is $G = 2^B$, and the transmitting end and the receiving end jointly store the codebook $C = \{c_1, c_2, ..., c_G\}$. The receiving end obtains the channel matrix by measuring the pilot signal, selects a codeword $c_g$ that best matches the channel from the codebook C according to certain criteria, and feeds back the codeword sequence number g to the transmitting end. Here, the codeword sequence number g is also referred to as a precoding matrix indicator (PMI). The transmitting end obtains the codeword $c_g$ according to the codeword sequence number $g$, thereby obtaining the channel information.

The characteristics of the channel information are determined by the properties of electromagnetic waves. The wave path difference of electromagnetic waves reaching each unit of the antenna array determines the relative phase relationship of the channel information. In the 5G NR system, it is assumed that the terminal equipment is located in the far field of the antenna array. In this case, electromagnetic waves reaching the receiving end in a particular direction can be regarded as plane waves. The codebook has the form of a complex exponential function. The phase of each unit of the codeword has a linear relationship with the antenna index. For example, in the 3rd Generation Partnership Project (3GPP) 38.214 protocol, the codeword in the 4, 8, 12, 16, 24 and 32 antenna port scenarios includes the following codeword blocks:

$$\overline{u}_m = \begin{cases} \left[ 1, e^{j\frac{2\pi m}{O_2 N_2}}, \ldots, e^{j\frac{2\pi m(N_2-1)}{O_2 N_2}} \right], N_2 > 1 \\ 1, N_2 = 1 \end{cases}$$

$$\overline{v}_{l,m} = \left[ \overline{u}_m, e^{j\frac{2\pi l}{O_1 N_1}} \overline{u}_m, \ldots, e^{j\frac{2\pi l(N_1-1)}{O_1 N_1}} \overline{u}_m \right]^{\mathrm{T}}.$$

In the above formula, the phase of each unit $u_m$ and $v_{l,m}$ is a linear function of the subscript index.

Massive MIMO, which is the core technology of the 5G communication system, is characterized by a large number of antennas configured at base stations. Combined with multi-user MIMO technology, a base station can multiplex multiple users on the same time-frequency resource. Generally, the ratio of the number of antennas to the number of multiplexing users is maintained at about 5 to 10. To multiplex more users and further improve spectral efficiency, very large-scale MIMO will be applied to the next generation wireless communication system. However, as the scale of the antenna array is further increased, the probability of UE appearing in the near field is significantly increased. According to the classical theory, the near field range can be expressed as:

$$r < \frac{2D^2}{\lambda}.$$

**EP 4 693 925 A1**

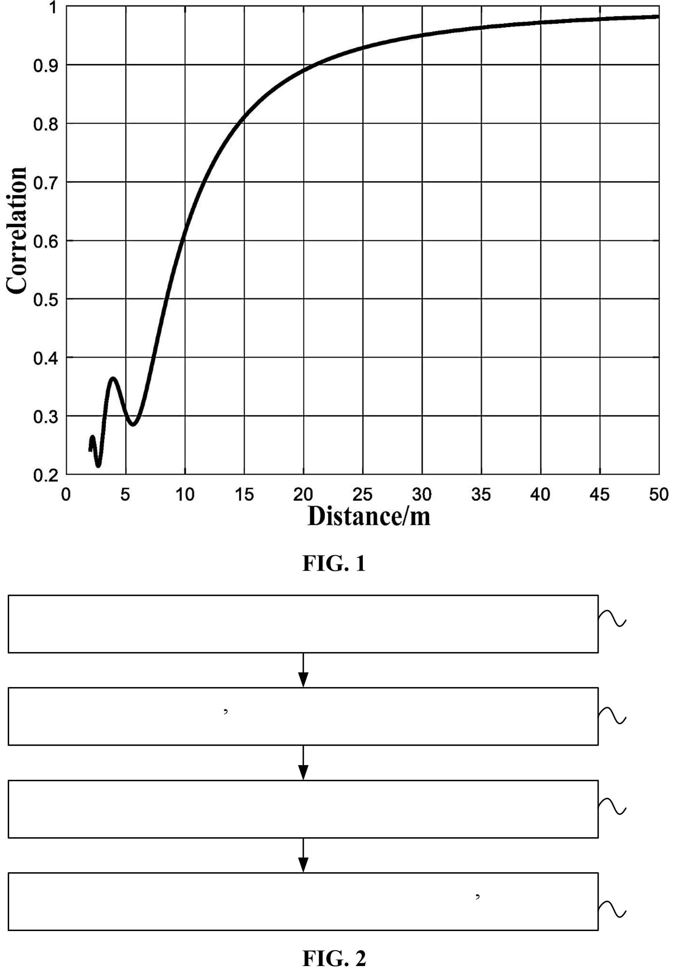

In the above formula, $D$ denotes the maximum size of the antenna array, and $\lambda$ denotes the wavelength. Using a 100*100 very large-scale antenna array as an example, assuming that the operating frequency is 30 GHz, the region whose $r < 100$ m in this case can be regarded as the near field. For a scenario where user equipment (UE) is located in the near field, electromagnetic waves reaching the antenna array can no longer be regarded as plane waves. Using an existing codebook will cause insufficient accuracy of the feedback channel information, thereby affecting system performance. Here, an example is used for description. A uniform linear array (ULA) containing 128 elements is considered. The angle between the electromagnetic wave pointing to the UE and the antenna array is 0 degree. For a far-field scenario, only the path of the line of sight (LoS) is considered, and the feedback of all-1 vectors by the UE can accurately represent the channel information, that is, the correlation between the channel vector and the feedback codeword is 1. However, for the near-field channel, reference is made to FIG. 1. The correlation between the codeword and the channel vector decreases rapidly as the distance between the UE and the antenna array decreases, reflecting that the base station cannot acquire accurate channel information according to the feedback codeword. The predefined codeword in the related art does not match with the near-field channel model, and the feedback codeword cannot accurately describe the channel information, resulting in a decrease in the communication effect.

SUMMARY

A main object of embodiments of the present application is to provide a channel information feedback method, an electronic device, and a storage medium, involving a subarray precoding scheme to enable channel state information feedback in near-field communications, thereby addressing near-field communication problems and enhancing the beamforming gain.

An embodiment of the present application provides a channel information feedback method. The method includes determining a measurement result of channel state information according to a measured reference signal; determining a codebook, where the codebook includes at least one codeword; determining a codeword in the codebook according to the measurement result; and feeding back indication information of the codeword, where the codeword is composed of basic codeword blocks, and at least one of the basic codeword blocks is represented as follows:

$$\tilde{\mathbf{v}} = \begin{bmatrix} \alpha_0 \mathbf{v}_0 \\ \alpha_1 \mathbf{v}_1 \\ \vdots \\ \alpha_{K-1} \mathbf{v}_{K-1} \end{bmatrix}.$$

In the above formula, a coefficient $\alpha_k$ is a complex scalar, a sub-vector $\mathbf{v}_k$ is a complex vector, and $k \in \{0,1,...,K-1\}$; $K$ is an integer greater than 1; and the indication information includes at least sub-vector indication information indicating the sub-vector $\mathbf{v}_k$.

An embodiment of the present application provides an electronic device. The electronic device includes one or more processors and a memory configured to store one or more programs.

When executed by the one or more processors, the one or more programs cause the one or more processors to perform the channel information feedback method according to any embodiment of the present application.

An embodiment of the present application further provides a computer-readable storage medium. The computer-readable storage medium stores one or more programs. The one or more programs are configured, when executed by one or more processors, cause the one or more processors to perform the channel information feedback method according to any embodiment of the present application.

BRIEF DESCRIPTION OF DRAWINGS

FIG. 1 is an association example diagram of the correlation between an antenna array distance and a codeword channel vector according to an embodiment of the present application.

FIG. 2 is a flowchart of a channel state information feedback method according to an embodiment of the present application.

FIG. 3 is a structural diagram of a channel state information feedback apparatus according to an embodiment of the

3

present application.

FIG. 4 is a structural diagram of an electronic device according to an embodiment of the present application.

DETAILED DESCRIPTION

FIG. 2 is a flowchart of a channel state information feedback method according to an embodiment of the present application. This embodiment of the present application may be applied to the case where a MIMO array is divided into several sub-arrays to implement channel information feedback. The method may be performed by a channel information feedback apparatus, and the apparatus may be implemented by software and/or hardware methods. As shown in FIG. 2, the method provided in this embodiment of the present application specifically includes S110 to S140.

In S110, a measurement result of channel state information is determined according to a measured reference signal.

In this embodiment of the present application, the measurement result of the channel state information may be determined by the measured reference signal. Specifically, the reference signal transmitted by the communication terminal may be received, and the measurement result of the channel state information may be determined through estimation of the reference signal. The reference signal may be a pilot signal used for channel estimation. The reference signal may be a known signal sequence. The sequence may be denoted as s. The received reference signal may be represented as:

$$y = Hs + n.$$

In the above formula, H is a channel matrix. y is a received signal vector. n is a noise vector. Channel estimation may be performed based on the received reference information in manners such as minimum mean-square error and linear minimum mean squared error, thereby determining the channel matrix H as the channel state information. Since the dimension of H is generally large, directly feeding H back to the first communication node will cause a very large overhead. Therefore, the channel information generally needs to be quantified.

In S120, a codebook is determined, where the codebook includes at least one codeword.

The codebook may be an information set for precoding subarrays in the MIMO array. The codebook may include codewords. Each codeword may be used for precoding the MIMO array. At least one codeword in the codebook is obtained by using the basic codeword block of this embodiment of the present application. For example, all codewords in the codebook may be obtained by using the basic codeword block of the present application, or some codewords in the codebook are obtained by using the basic codeword block of the present application, and other codewords may be generated by using another model.

In this embodiment of the present application, one or more codebooks may be preconfigured based on the communication transmission scenario and the communication transmission requirement, and the codebook for feeding back channel state information may be selected from the one or more codebooks. Specifically, in some embodiments, the codebook may be determined based on the measurement result of the channel state information, or the maximum number of transmission layers of the current channel may be determined based on the rank of the channel matrix H or the channel quality indication information so that a proper codebook is determined.

In S130, a codeword W is determined in the codebook according to the measurement result.

An appropriate codeword may be selected from the codebook through the measurement result. The selected codeword W is used for configuration of precoding of the MIMO array and for information transmission. One codeword in the codebook may correspond to one piece of spatial channel information, and therefore, the channel information may be obtained through the fed-back codeword information.

In S140, indication information of the codeword W is fed back, where the codeword is composed of basic codeword blocks, and at least one of the basic codeword blocks is represented as follows:

$$\tilde{\mathbf{v}} = \begin{bmatrix} \alpha_0 \mathbf{v}_0 \\ \alpha_1 \mathbf{v}_1 \\ \vdots \\ \alpha_{K-1} \mathbf{v}_{K-1} \end{bmatrix}.$$

In the above formula, a coefficient $\alpha_k$ is a complex scalar, a sub-vector $\mathbf{v}_k$ is a complex vector, and $k \in \{0,1,...,K-1\}$; $K$ is an integer greater than 1; and the indication information includes at least sub-vector indication information indicating the sub-vector $\mathbf{v}_k$.

In this embodiment of the present application, the indication information of the codeword determined in the above S140 may be determined, and the codebook used by the communication terminal for communication may be indicated by the indication information. Since the codeword is composed of one or more precoding vectors, directly feeding back the codeword occupies a relatively large channel resource overhead. The channel overhead of the codeword transmission may be reduced by the indication information, and the indication information may be used for indicating the codeword. In this embodiment of the present application, the codeword may be composed of basic codeword blocks, and each basic codeword block is composed of sub-vectors and coefficients. The feedback indication information may include at least sub-vector indication information indicating the sub-vector, and indicating the sub-vector of the basic codeword block may achieve the composition of the codeword W.

A pre-agreed codeword generation model is used in the terminal equipment UE and the base station, and a group of codewords are obtained according to different model input parameters. Specifically, the input parameter may be indication information. A set composed of a group of codewords may be referred to as a codebook. Specifically, a codeword may be specifically a vector or a matrix. A codeword may represent channel information. Position exchange of each unit in a codeword may not change the feedback performance. For example, the codeword in the form of a matrix may be vectorized, and in this embodiment of the present application, any transformation of the position of each unit of the codeword may be regarded as an equivalent transformation.

In some embodiments of the application, a codeword may be composed of basic codewords and may be obtained through mathematical operations on the basic codewords. The codeword may have the following form:

$$\overline{u}_m = \begin{cases} \left[ 1, e^{j\frac{2\pi m}{O_2 N_2}}, \ldots, e^{j\frac{2\pi m(N_2-1)}{O_2 N_2}} \right], & N_2 > 1 \\ 1, & N_2 = 1 \end{cases}$$

$$\overline{v}_{l,m} = \left[ \overline{u}_m, e^{j\frac{2\pi l}{O_1 N_1}} \overline{u}_m, \ldots, e^{j\frac{2\pi l(N_1-1)}{O_1 N_1}} \overline{u}_m \right]^{\mathrm{T}}.$$

In the above formula, $\overline{u}_m$ may be regarded as a basic codeword block constituting $\overline{v}_{l,m}$. Moreover, a codebook of type TYPE I using single-layer transmission as an example has the following form:

$$W_{l,m,n}^{(1)} = \frac{1}{\sqrt{P_{\mathrm{CSI\text{-}RS}}}} \begin{bmatrix} \overline{v}_{l,m} \\ \varphi_n \overline{v}_{l,m} \end{bmatrix},$$

where $P_{\mathrm{CSI\text{-}RS}}$ denotes the number of CSI-RS pilot ports, and $\varphi_n$ is a parameter indicated by feedback. In this case, $\overline{v}_{l,m}$ may be regarded as a basic codeword block constituting $W_{l,m,n}^{(1)}$.

The basic codeword block provided in this embodiment of the present application may be represented as follows:

$$\tilde{\mathbf{V}} = \begin{bmatrix} \alpha_0 \mathbf{V}_0 \\ \alpha_1 \mathbf{V}_1 \\ \vdots \\ \alpha_{K-1} \mathbf{V}_{K-1} \end{bmatrix}.$$

In the above formula, a coefficient $\alpha_k$ is a complex scalar, a sub-vector $\mathbf{v}_k$ is a complex vector, and $k \in \{0,1,\ldots,K-1\}$; $K$ is an integer greater than 1; and the indication information includes at least sub-vector indication information indicating the sub-vector $\mathbf{v}_k$.

In this embodiment of the present application, a set of channel state information reference signal (CSI-RS) pilots are configured for channel measurement, $(N_1, N_2)$. The first communication equipment configured with $N_r$ antennas may acquire pilot configuration information transmitted by the second communication equipment, and the first communication equipment may perform measurement at a corresponding resource position to obtain channel matrix information of $N_r \times N_1 N_2$ dimensions. Based on this, the basic codeword block that may be used for constructing the codeword may be as follows:

$$\tilde{\mathbf{v}} = \begin{bmatrix} \alpha_0 \mathbf{v}_0 \\ \alpha_1 \mathbf{v}_1 \\ \vdots \\ \alpha_{K-1} \mathbf{v}_{K-1} \end{bmatrix}.$$

In the above formula, a coefficient $\alpha_k$ is a complex scalar, a sub-vector $\mathbf{v}_k$ is a complex vector, and $k \in \{0,1,...,K-1\}$; $K$ is an integer greater than 1.

The indication information indicating the codeword W may include sub-vector indication information indicating sub-vectors constituting the codeword W, and the composition of the codeword W may be indicated by the sub-vector indication information, thereby achieving the feedback of the channel state information.

In an example embodiment, the sub-vector indication information includes at least first sub-vector indication information and second sub-vector indication information, at least one sub-vector $\mathbf{v}_k$ constituting the basic codeword blocks is determined according to the first sub-vector indication information, and at least one other sub-vector $\mathbf{v}_j$ constituting the basic codeword blocks is jointly determined according to the first sub-vector indication information and the second sub-vector indication information, where $j \in \{0,1,..., K-1\}$ and $j \neq k$.

In this embodiment of the present application, the sub-vector indication information may be composed of at least first sub-vector indication information and second sub-vector indication information. The first sub-vector indication information may indicate one sub-vector constituting a basic codeword block, and other vectors constituting the basic codeword block may be jointly determined by the second sub-vector indication information and the first sub-vector indication information. In some embodiments, the first sub-vector indication information may indicate one sub-vector of one basic codeword block, and other sub-vectors in the basic codeword block may be determined by the second sub-vector indication information and the sub-vector indicated by the first sub-vector indication information. For example, there may be a fixed difference value between the sub-vectors in the basic codeword block. The first sub-vector indication information indicates one sub-vector in the basic codeword block, and the second sub-vector indication information may indicate the fixed difference value. Other sub-vectors may be determined based on the above sub-vector and the fixed difference value.

On the basis of the preceding embodiment of the application, sub-vectors $\mathbf{v}_k$ constitute a sub-vector set $V$, a first sub-vector set $V_1$ is determined in the sub-vector set $V$ according to the first sub-vector indication information, a second sub-vector set $V_2$ is determined in the first sub-vector set $V_1$ according to the second sub-vector indication information, the second sub-vector set is a proper subset of the first sub-vector set, and the first sub-vector set is a subset of the sub-vector set.

The indication information includes first sub-vector indication information. The first sub-vector indication information may indicate one sub-vector constituting a basic codeword block of the codeword. The sub-vector may be any sub-vector in the basic codeword block, that is, all sub-vectors of the basic codeword block may constitute the sub-vector set $V$. The sub-vectors indicated by the first sub-vector indication information may constitute the first sub-vector set $V_1$. The first sub-vector set $V_1$ may be a subset of the sub-vector set $V$, and the second sub-vector indication information may determine other sub-vectors based on the sub-vector indicated by the first sub-vector indication information. The determined other sub-vectors may constitute the second sub-vector set $V_2$. The second sub-vector set $V_2$ may be a proper subset of the first sub-vector set $V_1$.

On the basis of the preceding embodiment of the application, sub-vectors $\mathbf{v}_k$ constitute a sub-vector set $V$, and an $X$-th sub-vector set $V_X$ is determined in an $(X-1)$-th sub-vector set $V_{X-1}$ according to X-th sub-vector indication information, where $X$ is a positive integer less than or equal to $K-1$, and when $X=1$, the $(X-1)$-th sub-vector set $V_{X-1}$ is the sub-vector set $V$, and the $X$-th sub-vector set $Vx$ satisfies the following relationship:

$$V_X \subseteq V_{X-1} \cdots \subseteq V_2 \subseteq V_1 \subset V.$$

In the above formula, $\subset$ denotes a proper subset relationship, $\subseteq$ denotes a subset relationship, and $X$ is a positive integer.

In this embodiment of the present application, the indication information may include multiple pieces of sub-vector indication information. The first sub-vector indication information may indicate each sub-vector in the sub-vector set $V$ composed of the sub-vectors $\mathbf{v}_k$. The second sub-vector indication information may indicate other sub-vectors except for the sub-vectors indicated by the first sub-vector indication information in the sub-vector set $V$. The third sub-vector indication information may indicate sub-vectors except for the sub-vectors indicated by the first sub-vector indication information and other sub-vectors indicated by the second sub-vector indication information. By analogy, the $X$-th sub-vector indication information may indicate other sub-vectors except for the previously determined $X$-1 sub-vectors. Correspondingly, the sub-vector set composed of the sub-vectors indicated by each piece of sub-vector indication information may have the following relationship:

$$V_X \subseteq V_{X-1} \cdots \subseteq V_2 \subseteq V_1 \subset V .$$

In the above formula, the sub-vector set indicated by each piece of sub-vector indication information may be a proper subset of the sub-vector set indicated by the previous piece of sub-vector indication information, where the first sub-vector indication information may be specifically a subset of the sub-vector set.

On the basis of the preceding embodiment of the application, the $X$-th sub-vector set $V_X$ conforms to the following relationship:

$$V_1 = V = \left\{ \mathbf{v}_0, \mathbf{v}_1, \ldots, \mathbf{v}_{K-1} \right\}, \quad V_2 = \left\{ \mathbf{v}_1, \ldots, \mathbf{v}_{K-1} \right\}, \ldots, \quad V_K = \left\{ \mathbf{v}_{K-1} \right\}.$$

In this embodiment of the present application, the first sub-vector indication information may indicate each sub-vector in the sub-vector set V composed of the sub-vectors $\mathbf{v}_k$, the second sub-vector indication information may indicate other sub-vectors except for the sub-vectors indicated by the first sub-vector indication information in the sub-vector set $V$, the third sub-vector indication information may indicate sub-vectors except for the sub-vectors indicated by the first sub-vector indication information and other sub-vectors indicated by the second sub-vector indication information, and by analogy, the $X$-th sub-vector indication information may indicate other sub-vectors except for the previously determined $X$-1 sub-vectors. Therefore, each $X$-th sub-vector set may satisfy the following relationship:

$$V_1 = V = \left\{ \mathbf{v}_0, \mathbf{v}_1, \ldots, \mathbf{v}_{K-1} \right\}, \quad V_2 = \left\{ \mathbf{v}_1, \ldots, \mathbf{v}_{K-1} \right\}, \ldots, \quad V_K = \left\{ \mathbf{v}_{K-1} \right\}.$$

In some embodiments of the application, at least one coefficient $\alpha_k$ of the basic codeword blocks is determined according to first coefficient indication information, and at least one other coefficient $a_j$ of the basic codeword blocks is jointly determined according to the first coefficient indication information and second coefficient indication information.

In this embodiment of the present application, the indication information may further include first coefficient indication information and second coefficient indication information, where the first coefficient indication information may indicate a coefficient of a basic codeword block constituting the codeword. The coefficient may be a coefficient of any sub-vector in the basic codeword block, and one or more other coefficients may be jointly determined by the first coefficient indication information and the second coefficient indication information. For example, one coefficient of a basic codeword block constructing the codeword may be determined by the first coefficient indication information, and other coefficients in the basic codeword block except for the coefficient indicated by the first coefficient indication information may be indicated by the second coefficient indication information.

In some other embodiments of the application, coefficients $\alpha_k$ constitute a coefficient set $A$, a first coefficient set $A_1$ is determined in the coefficient set $A$ according to first coefficient indication information, a second coefficient set $A_2$ is determined in the first coefficient set $A_1$ according to second coefficient indication information, the second coefficient set $A_2$ is a proper subset of the first coefficient set $A_1$, and the first coefficient set $A_1$ is a subset of the coefficient set $A$.

The indication information may include first coefficient indication information and second coefficient indication information, and all coefficients for constituting the sub-vector of the basic codeword block may be used as constituent elements of the coefficient set $A$. The first coefficient indication information may indicate a coefficient, and the coefficient may be any coefficient in the coefficient set $A$. The first coefficient set $A_1$ composed of the coefficients indicated by the first coefficient indication information may be a subset of the coefficient set $A$, the coefficients indicated by the second coefficient indication information may be other coefficients except for the coefficients indicated by the first coefficient indication information in the coefficient set $A$, and the second coefficient set $A_2$ composed of the other coefficients may be a proper subset of the first coefficient set $A_1$.

In some embodiments of the application, coefficients $\alpha_k$ constitute a coefficient set $A$, and an $X$-th coefficient set $A_X$ is determined in an $(X\text{-}1)$-th coefficient set $A_{X-1}$ according to $X$-th coefficient indication information, where $X$ is a positive integer less than or equal to $K$-1, and when $X = 1$, the $(X-1)$-th coefficient set $A_{X-1}$ is the coefficient set $A$, and the $X$-th coefficient set $A_X$ satisfies the following relationship:

$$A_X \subseteq A_{X-1} ... \subseteq A_2 \subseteq A_1 \subset A .$$

In the above formula, $\subseteq$ denotes a proper subset relationship, $\subset$ denotes a subset relationship, and $X$ is a positive integer.

In this embodiment of the present application, $X$ pieces of coefficient indication information may be included in the indication information. Each piece of coefficient indication information may be denoted as $X$-th coefficient indication information, and $X$ may be a positive integer equal to or greater than 1. All coefficients for constituting the sub-vector of the basic codeword block may be used as constituent elements of the coefficient set $A$. The first coefficient indication information may indicate any coefficient in the coefficient set $A$, the second coefficient indication information may indicate other coefficients except for the coefficients indicated by the first coefficient indication information in the first coefficient set $A_1$, and by analogy, the $X$-th coefficient indication information may indicate other coefficients except for the coefficients indicated by the $(X-1)$-th indication information in the $(X-1)$-th coefficient set $A_{X-1}$, so that each $X$-th coefficient set $A_X$ satisfies the following relationship:

$$A_X \subseteq A_{X-1} ... \subseteq A_2 \subseteq A_1 \subset A .$$

In the above formula, $\subseteq$ denotes a proper subset relationship, $\subset$ denotes a subset relationship, and $X$ is a positive integer.

On the basis of the preceding embodiment of the application, the $X$-th coefficient set $A_X$ conforms to the following relationship:

$$A_1 = A = \{\alpha_0, \alpha_1, ..., \alpha_{K-1}\}, \quad A_2 = \{\alpha_1, ..., \alpha_{K-1}\}, ..., \quad A_K = \{\alpha_{K-1}\} .$$

In an example embodiment, the sub-vector indication information includes at least a linear function indication parameter, where the linear function indication parameter indicates a linear function with respect to $k$ satisfied by a parameter of the sub-vector $\mathbf{v}_k$.

In this embodiment of the present application, the sub-vector indication information may include a linear function indication parameter. The linear function indication parameter may indicate a linear function to which some parameters constituting each sub-vector in the basic code block conform or a linear function to which each sub-vector conforms, and may include parameters such as a slope and an intercept to which the linear function conforms.

On the basis of the preceding embodiment of the application, the sub-vector $\mathbf{v}_k$ in the basic codeword blocks is represented as follows:

$$\mathbf{v}_k = \left[ 1, e^{j\frac{2\pi m_k}{OL_k}}, ..., e^{j\frac{2\pi m_k (L_k-1)}{OL_k}} \right]^T .$$

In the above formula, a value of $m_k$ is determined according to the sub-vector indication information of the indication information, $L_k$ denotes a sub-vector dimension, and $O$ is a preconfigured real number.

In this embodiment of the present application, the form of the sub-vector of the basic codeword block may be configured in advance, and the specific situation of the sub-vector may be indicated by the sub-vector indication information of the indication information so that the corresponding codeword is composed of the sub-vector to achieve channel state transmission, where the sub-vector indication information may specifically indicate some parameters $m_k$ in the sub-vector.

In some embodiments of the application, the linear function indication parameter indicates the linear function of $k$ satisfied by the value of the parameter $m_k$ of the sub-vector $\mathbf{v}_k$.

The linear function indication parameter may be used for indicating the value of the parameter in the sub-vector $m_k$. The linear function may be a linear function having a correspondence with k, for example, $m_k = \alpha_k + b$ and $k \in \{0,1,...,K-1\}$. According to the linear function, for each sub-vector, the value of $m_k$ may be determined based on the value of $k$, and $a$ and $b$ may be specifically real numbers indicated by the linear function indication parameter. The above linear function is only an example and is not limited. The linear relationship functions to which the value $k$ of the sub-vector and the value of the parameter $m_k$ conform are all within the protection scope of the present application.

In some other embodiments of the application, the first sub-vector indication information and the second sub-vector indication information indicate the value of the parameter $m_k$ of the sub-vector $\mathbf{v}_k$.

In the embodiment of the present application, the value of the parameter $m_k$ may be jointly indicated by the first sub-vector indication information and the second sub-vector indication information. For example, the values of the parameter $m_k$ may differ by a fixed value. The value of the parameter $m_1$ may be indicated by the first sub-vector indication information, and the second sub-vector indication information may indicate the fixed difference value. The value of the parameter $m_k$ may be indicated by the first sub-vector indication information and the second sub-vector indication information in the above manner. The above description is only an example and is not limited. Other values of the parameter $m_k$ indicated by the first sub-vector indication information and the second sub-vector indication information are all within the protection scope of this embodiment of the present application.

In some embodiments of the application, the sub-vector $\mathbf{v}_k$ in the basic codeword blocks is represented as follows:

$$\mathbf{v}_k = \mathrm{vec}\left(\mathbf{x}_k \otimes \mathbf{y}_k\right)$$

$$\mathbf{x}_k = \left[1, e^{j\frac{2\pi m_k}{O_1 L_{1,k}}}, \ldots, e^{j\frac{2\pi m_k\left(L_{1,k}-1\right)}{O_1 L_{1,k}}}\right]^{\mathrm{T}}$$

$$\mathbf{y}_k = \left[1, e^{j\frac{2\pi n_k}{O_2 L_{2,k}}}, \ldots, e^{j\frac{2\pi n_k\left(L_{2,k}-1\right)}{O_2 L_{2,k}}}\right]^{\mathrm{T}}.$$

In the above formula, $m_{1,k}$ and $m_{2,k}$ are determined according to the sub-vector indication information of the indication information, $L_{1,k}$ and $L_{2,k}$ denotes sub-vector dimensions, $O_1$ and $O_2$ are preconfigured real numbers, $\otimes$ denotes Kronecker product, and vec denotes a vectorized operation of rearranging a matrix into a column vector.

In some other embodiments of the application, the sub-vector $\mathbf{v}_k$ in the basic codeword blocks includes:

$$\mathbf{v}_k = \left[1, e^{j\pi\left(m_{1,k}+m_{2,k}\right)}, e^{j\pi\left(2m_{1,k}+4m_{2,k}\right)}, \ldots, e^{j\pi\left(\left(L_k-1\right)m_{1,k}+\left(L_k-1\right)^2 m_{2,k}\right)}\right]^{\mathrm{T}}$$

where $m_{1,k}$ and $m_{2,k}$ are determined according to the sub-vector indication information of the indication information, and $L_k$ denotes a sub-vector dimension.

In some other embodiments of the application, the coefficient $\alpha_k$ in the basic codeword blocks is $\alpha_k = e^{j\frac{2\pi g_k}{G}}$, where $g_k$ is determined according to feedback coefficient indication information, and G is a preconfigured real number.

In some other embodiments of the application, sub-vectors $\mathbf{v}_k$ have the same length, and the number $K$ of sub-vectors and a sub-vector dimension are determined based on pre-agreement or preconfiguration.

In this embodiment of the present application, the sub-vectors in the basic codeword block may have the same length, and the number $K$ of sub-vectors in the basic codeword block constituting the codeword and the sub-vector dimension may be agreed or configured in advance. Before the transmission, the communication node may pre-agree the data such as the number of basic codeword blocks constituting the codeword and the sub-vector dimension. The first node may feed back the instruction information of the codeword according to the channel state information, and the second node may receive the instruction information, construct a basic codeword block according to the instruction information, the preconfigured number K of sub-vectors and the sub-vector dimension and determine the codeword by using the basic codeword block, thereby determining the channel state by using the codeword.

In some other embodiments of the application, sub-vectors $\mathbf{v}_k$ have different lengths, and the number $K$ of sub-vectors and a sub-vector dimension are determined based on pre-agreement or preconfiguration.

In this embodiment of the present application, the sub-vectors in the basic codeword block may have different lengths, and each sub-vector dimension may be separately agreed or preconfigured.

In some example embodiments, using channel state information feedback between the base station and the terminal equipment UE as an example, the base station configures a set of CSI-RS pilots for the terminal equipment UE for channel measurement, and the pilot port dimension may be ($N_1$, $N_2$). The UE configured with $N_r$ antennas obtains the pilot configuration information transmitted by the base station and may perform measurement at a corresponding resource position based on the pilot configuration information to obtain channel matrix information of $N_r \times N_1 N_2$ dimensions. The UE may select a codeword in the codebook according to the measured channel matrix information, and the codeword may be a codeword constructed by a codeword generation model used by the base station for configuring the UE, where the basic codeword block has the following form:

$$\tilde{\mathbf{v}} = \begin{bmatrix} \alpha_0 \mathbf{v}_0 \\ \alpha_1 \mathbf{v}_1 \\ \vdots \\ \alpha_{K-1} \mathbf{v}_{K-1} \end{bmatrix}.$$

In the above formula, all sub-vectors $\mathbf{v}_k$ in the basic codeword block have the same dimension L = $L_1 L_2$, it is assumed here that $N_1$ and $N_2$ are divisible by $L_1$ and $L_2$, respectively, $K_1 = N_1/L_1$, $K_2 = N_2/L_2$, and $K = K_1 K_2$. The sub-vector $\mathbf{v}_k$ and the coefficient $\alpha_k$ have the following forms:

$$\mathbf{v}_k = \mathrm{vec}\left( \mathbf{x}_k \otimes \mathbf{y}_k \right), k \in \left\{0, 1, \ldots, K-1\right\}$$

$$\mathbf{x}_k = \left[ 1, e^{j\frac{2\pi m_k}{O_1 L_1}}, \ldots, e^{j\frac{2\pi m_k (L_1 - 1)}{O_1 L_1}} \right]^{\mathrm{T}}, m_k \in \left\{0, 1, \ldots, O_1 L_1 - 1\right\}$$

$$\mathbf{y}_k = \left[ 1, e^{j\frac{2\pi n_k}{O_2 L_2}}, \ldots, e^{j\frac{2\pi n_k (L_2 - 1)}{O_2 L_2}} \right]^{\mathrm{T}}, n_k \in \left\{0, 1, \ldots, O_2 L_2 - 1\right\}$$

$$\alpha_k = e^{j\frac{2\pi g_k}{G}}, g_k \in \left\{0, 1, \ldots, G-1\right\}$$

In the above formula, $m_k$, $n_k$ and $g_k$ are integers and belong to codeword generation parameters, $O_1$, $O_2$ and G are real numbers configured by the base station to the UE, $\otimes$ denotes Kronecker product, vec(.) denotes a vectorized operation to rearrange a matrix into a column vector.

The UE selects the best codeword according to the measured channel matrix information of $N_r \times N_1 N_2$ dimensions and indicates the codeword generation parameters by using the feedback indication information. Specifically, each parameter in the sets $M_1 = \{m_0, M_{\tilde{K}}, M_{2\tilde{K}}, ..., m_{K-\tilde{K}}\}$, $N_1 = \{n_0, n_{\tilde{K}}, n_{2\tilde{K}}, ..., n_{K-\tilde{K}}\}$ and $G_1 = \{g_0, g_{\tilde{K}}, g_{2\tilde{K}}, ..., g_{K-\tilde{K}}\}$ may be directly determined according to the first indication information, where $\tilde{K}$ is an integer configured by the base station to the UE, and it is assumed that $K$ is divisible by $\tilde{K}$. Other parameters $m_k$, $n_k$ and $g_k$ outside the sets are jointly determined according to parameter values in $M_1$, $N_1$ and $G_1$ and the offsets $\Delta m_k$, $\Delta n_k$ and $\Delta g_k$, and the offsets are determined by the second indication information. The specific calculation methods are as follows:

$$m_k = m_j + \Delta m_k$$

$$n_k = n_j + \Delta n_k$$

$$g_k = g_j + \Delta g_k$$

$k \in \{0, 1, ..., K - 1\}$, $j\tilde{K} < k < (j + 1)\tilde{K}$, $j$ is an integer.

In conclusion, the parameter that requires the first indication information to be confirmed is $\{\mathbf{v}_0, \mathbf{v}_1, ..., \mathbf{v}_{K-1}, \alpha_0,$

$\alpha_1, ..., \alpha_{K-1}$}, and the parameter that requires the second indication information to be confirmed is {$v_k$, $a_k | k \in \{0, 1, ..., K-1\}, j\tilde{K} < k < (j+1)\tilde{K}, j$ is an integer}. In engineering practice, the parameters in $M_1$, $N_1$ and $G_1$ may be quantized with higher precision, while the offsets $\Delta m_k$, $\Delta n_k$ and $\Delta g_k$ may be quantized with lower precision, thereby avoiding the excessive feedback overhead caused by high-precision quantization of each parameter.

In some other example embodiments, using channel state information feedback between the base station and the terminal equipment UE as an example, the base station configures a set of CSI-RS pilots for the UE for channel measurement, and the pilot port dimension information is ($N_1$, $N_2$). The UE configured with $N_r$ antennas obtains the pilot configuration information transmitted by the base station and performs measurement at a corresponding resource position to obtain channel matrix information of $N_r \times N_1 N_2$ dimensions. The codeword generation model used by the UE is configured in the base station, where the basic codeword block has the following form:

$$\tilde{\mathbf{v}} = \begin{bmatrix} \alpha_0 \mathbf{v}_0 \\ \alpha_1 \mathbf{v}_1 \\ \vdots \\ \alpha_{K-1} \mathbf{v}_{K-1} \end{bmatrix}.$$

In the above formula, all sub-vectors $\mathbf{v}_k$ have the same dimension $L = L_1 L_2$, it is assumed here that $N_1$ and $N_2$ are divisible by $L_1$ and $L_2$, respectively, $K_1 = N_1/L_1$, $K_2 = N_2/L_2$, and $K = K_1 K_2$. The sub-vector $\mathbf{v}_k$ and the coefficient $\alpha_k$ have the following forms:

$$\mathbf{v}_k = \mathrm{vec}(\mathbf{x}_k \otimes \mathbf{y}_k), k \in \{0, 1, ..., K-1\}$$

$$\mathbf{x}_k = \left[ 1, e^{j\frac{2\pi m_k}{O_1 L_1}}, ..., e^{j\frac{2\pi m_k (L_1-1)}{O_1 L_1}} \right]^{\mathrm{T}}, m_k \in \{0, 1, ..., O_1 L_1 - 1\}$$

$$\mathbf{y}_k = \left[ 1, e^{j\frac{2\pi n_k}{O_2 L_2}}, ..., e^{j\frac{2\pi n_k (L_2-1)}{O_2 L_2}} \right]^{\mathrm{T}}, n_k \in \{0, 1, ..., O_2 L_2 - 1\}$$

$$\alpha_k = e^{j\frac{2\pi g_k}{G}}, g_k \in \{0, 1, ..., G-1\}$$

In the above formula, $m_k$, $n_k$ and $g_k$ are integers and belong to codeword generation parameters, $O_1$, $O_2$ and $G$ are real numbers configured by the base station to the UE, $\otimes$ denotes Kronecker product, vec(.) denotes a vectorized operation to rearrange a matrix into a column vector.

The UE selects the best codeword according to the measured channel matrix information of $N_r \times N_1 N_2$ dimensions and indicates the codeword generation parameters by using the feedback information. Specifically, the values of $m_0$, $n_0$ and $g_0$ are determined according to the first indication information fed back by the UE, and the offsets $\Delta m_1$, $\Delta n_1$ and $\Delta g_1$ of $m_1$, $n_1$ and $g_1$ compared with $m_0$, $n_0$ and $g_0$ are determined by the second indication information fed back by the UE. The calculation methods are as follows:

$$m_1 = m_0 + \Delta m_1$$

$$n_1 = n_0 + \Delta n_1$$

$$g_1 = g_0 + \Delta g_1.$$

By analogy, the offsets $\Delta m_k$, $\Delta n_k$ and $\Delta g_k$ of $m_k$, $n_k$ and $g_k$ compared with $m_{k-1}$, $n_{k-1}$ and $g_{k-1}$ are determined by the $(k+1)$-th indication information fed back by the UE. The calculation methods are as follows:

$$m_k = m_{k-1} + \Delta m_k$$

$$n_k = n_{k-1} + \Delta n_k$$

$$g_k = g_{k-1} + \Delta g_k$$

$$k \in \{1, 2, \ldots, K-1\}.$$

In conclusion, the parameter that requires the first indication information to be confirmed is $\{v_0, v_1, \ldots, v_{K-1}, \alpha_0, \alpha_1, \ldots, \alpha_{K-1}\}$, the parameter that requires the second indication information to be confirmed is $\{v_1, v_2, \ldots, v_{K-1}, \alpha_1, \alpha_2, \ldots, \alpha_{K-1}\}$, and by analogy, the parameter that requires the K-th indication information to be confirmed is $\{v_{K-1}, \alpha_{K-1}\}$.

In engineering practice, the codeword generation parameters $m_0$, $n_0$ and $g_0$ may be quantized with higher precision, while the offsets $\Delta m_k$, $\Delta n_k$ and $\Delta g_k$ ($k \in \{1, 2, \ldots, K-1\}$) may be quantized with lower precision, such as 1-bit quantization, thereby avoiding the excessive feedback overhead caused by high-precision quantization of each parameter.

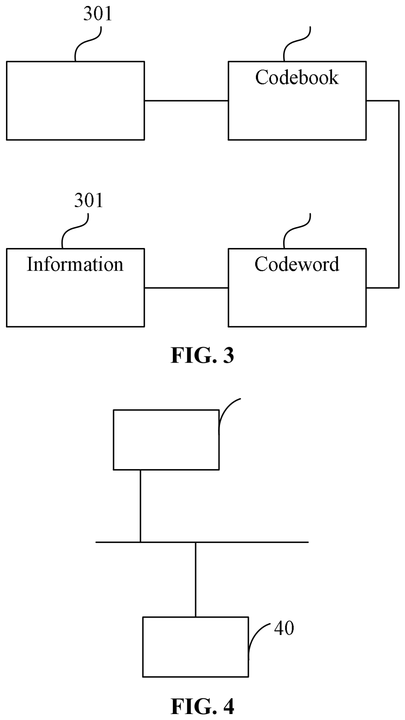

FIG. 3 is a structural diagram of a channel state information feedback apparatus according to an embodiment of the present application. The apparatus may perform the channel information feedback method according to any embodiment of the present application and has function modules and beneficial effects corresponding to the performed method. The apparatus may be implemented by software and/or hardware. As shown in FIG. 3, the apparatus provided in this embodiment of the present application specifically includes a channel measurement module 301, a codebook determination module 302, a codeword determination module 303 and an information feedback module 304.

The channel measurement module 301 is configured to determine a measurement result of channel state information according to a measured reference signal.

The codebook determination module 302 is configured to determine a codebook. The codebook includes at least one codeword.

The codeword determination module 303 is configured to determine a codeword in the codebook according to the measurement result.

The information feedback module 304 is configured to feed back indication information of the codeword. The codeword is composed of basic codeword blocks, and at least one of the basic codeword blocks is represented as follows:

$$\tilde{\mathbf{v}} = \begin{bmatrix} \alpha_0 \mathbf{V}_0 \\ \alpha_1 \mathbf{V}_1 \\ \vdots \\ \alpha_{K-1} \mathbf{V}_{K-1} \end{bmatrix}.$$

In the above formula, a coefficient $\alpha_k$ is a complex scalar, a sub-vector $\mathbf{v}_k$ is a complex vector, and $k \in \{0, 1, \ldots, K-1\}$; $K$ is an integer greater than 1; and the indication information includes at least sub-vector indication information indicating the sub-vector $\mathbf{v}_k$.

In some embodiments of the application, the sub-vector indication information includes at least first sub-vector indication information and second sub-vector indication information, at least one sub-vector $\mathbf{v}_k$ constituting the basic codeword blocks is determined according to the first sub-vector indication information, and at least one other sub-vector $\mathbf{v}_j$ constituting the basic codeword blocks is jointly determined according to the first sub-vector indication information and the second sub-vector indication information, where $j \in \{0, 1, \ldots, K-1\}$ $\mathbf{v}_k$ and $j \neq k$.

In some embodiments of the application, the sub-vector indication information includes at least a linear function indication parameter, where the linear function indication parameter indicates a linear function with respect to $k$ satisfied by a parameter of the sub-vector $\mathbf{v}_k$.

In some embodiments of the application, sub-vectors $\mathbf{v}_k$ constitute a sub-vector set $V$, a first sub-vector set $V_1$ is determined in the sub-vector set $V$ according to the first sub-vector indication information, a second sub-vector set $V_2$ is determined in the first sub-vector set $V_1$ according to the second sub-vector indication information, the second sub-vector set is a proper subset of the first sub-vector set, and the first sub-vector set is a subset of the sub-vector set.

In some embodiments of the application, sub-vectors $\mathbf{v}_k$ constitute a sub-vector set $V$, and an $X$-th sub-vector set $V_X$ is determined in an ($X$-1)-th sub-vector set $V_{X-1}$ according to X-th sub-vector indication information, where $X$ is a positive integer less than or equal to $K$-1, and when $X = 1$, the ($X$-1)-th sub-vector set $V_{X-1}$ is the sub-vector set $V$, and the $X$-th sub-vector set $V_X$ satisfies the following relationship:

$$V_X \subseteq V_{X-1} \cdots \subseteq V_2 \subseteq V_1 \subset V \ .$$

In the above formula, $\subseteq$ denotes a proper subset relationship, $\subset$ denotes a subset relationship, and $X$ is a positive integer.

In some embodiments of the application, the $X$-th sub-vector set $V_X$ conforms to the following relationship:

$$V_1 = V = \{\mathbf{v}_0, \mathbf{v}_1, \ldots, \mathbf{v}_{K-1}\}, \quad V_2 = \{\mathbf{v}_1, \ldots, \mathbf{v}_{K-1}\}, \ldots, \quad V_K = \{\mathbf{v}_{K-1}\} \ .$$

In some embodiments of the application, at least one coefficient $\alpha_k$ of the basic codeword blocks is determined based on first coefficient indication information, and at least one other coefficient $\alpha_j$ of the basic codeword blocks is jointly determined according to the first coefficient indication information and second coefficient indication information.

In some embodiments of the application, coefficients $\alpha_k$ constitute a coefficient set $A$, a first coefficient set $A_1$ is determined in the coefficient set $A$ according to first coefficient indication information, a second coefficient set $A_2$ is determined in the first coefficient set $A_1$ according to second coefficient indication information, the second coefficient set $A_2$ is a proper subset of the first coefficient set $A_1$, and the first coefficient set $A_1$ is a subset of the coefficient set $A$.

In some embodiments of the application, coefficients $\alpha_k$ constitute a coefficient set $A$, and an $X$-th coefficient set $A_X$ is determined in an ($X$-1)-th coefficient set $A_{X-1}$ according to $X$-th coefficient indication information, where $X$ is a positive integer less than or equal to $K$-1, and when $X = 1$, the ($X$-1)-th coefficient set $A_{X-1}$ is the coefficient set $A$, and the $X$-th coefficient set $A_X$ satisfies the following relationship:

$$A_X \subseteq A_{X-1} \cdots \subseteq A_2 \subseteq A_1 \subset A \ .$$

In the above formula, $\subseteq$ denotes a proper subset relationship, $\subset$ denotes a subset relationship, and $X$ is a positive integer.

In some embodiments of the application, the $X$-th coefficient set $A_X$ conforms to the following relationship:

$$A_1 = A = \{\alpha_0, \alpha_1, \ldots, \alpha_{K-1}\}, \quad A_2 = \{\alpha_1, \ldots, \alpha_{K-1}\}, \ldots, \quad A_K = \{\alpha_{K-1}\} \ .$$

In some embodiments of the application, the sub-vector $\mathbf{v}_k$ in the basic codeword blocks is represented as follows:

$$\mathbf{v}_k = \left[ 1, e^{j\frac{2\pi m_k}{OL_k}}, \ldots, e^{j\frac{2\pi m_k(L_k-1)}{OL_k}} \right]^{\mathrm{T}} \ .$$

In the above formula, a value of $m_k$ is determined according to the sub-vector indication information of the indication information, $L_k$ denotes a sub-vector dimension, and $O$ is a preconfigured real number.

In some embodiments of the application, the sub-vector $\mathbf{v}_k$ in the basic codeword blocks is represented as follows:

$$\mathbf{v}_k = \mathrm{vec}\left( \mathbf{x}_k \otimes \mathbf{y}_k \right)$$

$$\mathbf{x}_k = \left[ 1, e^{j\frac{2\pi m_k}{O_1 L_{1,k}}}, \ldots, e^{j\frac{2\pi m_k(L_{1,k}-1)}{O_1 L_{1,k}}} \right]^{\mathrm{T}}$$

$$\mathbf{y}_k = \left[ 1, e^{j\frac{2\pi n_k}{O_2 L_{2,k}}}, \ldots, e^{j\frac{2\pi n_k (L_{2,k}-1)}{O_2 L_{2,k}}} \right]^T .$$

In the above formula, $m_{1,k}$ and $m_{2,k}$ are determined according to the sub-vector indication information of the indication information, $L_{1,k}$ and $L_{2,k}$ denotes sub-vector dimensions, $O_1$ and $O_2$ are preconfigured real numbers, $\otimes$ denotes Kronecker product, and vec denotes a vectorized operation of rearranging a matrix into a column vector.

In some embodiments of the application, the sub-vector $\mathbf{v}_k$ in the basic codeword blocks includes:

$$\mathbf{v}_k = \left[ 1, e^{j\pi(m_{1,k}+m_{2,k})}, e^{j\pi(2m_{1,k}+4m_{2,k})}, \ldots, e^{j\pi((L_k-1)m_{1,k}+(L_k-1)^2 m_{2,k})} \right]^T .$$

In the above formula, $m_{1,k}$ and $m_{2,k}$ are determined according to the sub-vector indication information of the indication information, and $L_k$ denotes a sub-vector dimension.

In some embodiments of the application, the coefficient $\alpha_k$ in the basic codeword blocks is $\alpha_k = e^{j\frac{2\pi g_k}{G}}$, where $g_k$ is determined according to feedback coefficient indication information, and $G$ is a preconfigured real number.

In some embodiments of the application, sub-vectors $\mathbf{v}_k$ have the same length, and the number $K$ of sub-vectors and a sub-vector dimension are determined based on pre-agreement or preconfiguration.

In some embodiments of the application, sub-vectors $\mathbf{v}_k$ have different lengths, and the number $K$ of sub-vectors and a sub-vector dimension are determined based on pre-agreement or preconfiguration.

In some embodiments of the application, the linear function indication parameter indicates the linear function of $k$ satisfied by the value of the parameter $m_k$ of the sub-vector $\mathbf{v}_k$.

In some embodiments of the application, the first sub-vector indication information and the second sub-vector indication information indicate the value of the parameter $m_k$ of the sub-vector $\mathbf{v}_k$.

FIG. 4 is a structural diagram of an electronic device according to an embodiment of the present application. The electronic device includes a processor 40 and a memory 41. One or more processors 40 may be provided in the electronic device, and one processor 40 is used as an example in FIG. 4. The processor 40 and the memory 41 in the electronic device may be connected via a bus or in other manners. In FIG. 4, the connection via a bus is used as an example.

As a computer-readable storage medium, the memory 41 may be configured to store software programs, computer-executable programs and modules, such as programs corresponding to any transmission method in the embodiments of the present application and modules (the channel measurement module 301, the codebook determination module 302, the codebook determination module 303, and the information feedback module 304) corresponding to the transmission apparatus in the embodiments of the present application. The processor 40 executes software programs, instructions and modules stored in the memory 41 to perform functions and data processing of the electronic device, that is, to perform the preceding channel information feedback method.

The memory 41 may mainly include a program storage region and a data storage region. The program storage region may store an operating system and a program required by at least one function. The data storage region may store data created based on the use of the electronic device. Additionally, the memory 41 may include a high-speed random-access memory and may further include a non-volatile memory such as at least one magnetic disk memory, a flash memory, or another non-volatile solid-state memory. In some examples, the memory 41 may also be a memory remote from the processor 40 and connectable to the electronic device via a network. Examples of the network include the Internet, an intranet, a local area network, a mobile communication network and a combination thereof.

Embodiments of the present application further provide a storage medium including computer-executable instructions. When executed by a computer processor, the computer-executable instructions are used for causing the computer processor to perform a channel information feedback method. The method includes the following.

A measurement result of channel state information is determined according to a measured reference signal. A codebook is determined, where the codebook includes at least one codeword. A codeword is determined in the codebook according to the measurement result. Indication information of the codeword is fed back, where the codeword is composed of basic codeword blocks, and at least one of the basic codeword blocks is represented as follows:

$$\tilde{\mathbf{v}} = \begin{bmatrix} \alpha_0 \mathbf{v}_0 \\ \alpha_1 \mathbf{v}_1 \\ \vdots \\ \alpha_{K-1} \mathbf{v}_{K-1} \end{bmatrix}_\circ$$

In the above formula, a coefficient $\alpha_k$ is a complex scalar, a sub-vector $\mathbf{v}_k$ is a complex vector, and $k \in \{0,1,...,K-1\}$; $K$ is an integer greater than 1; and the indication information includes at least sub-vector indication information indicating the sub-vector $\mathbf{v}_k$.

From the preceding description of embodiments, it is apparent to those skilled in the art that the present application may be implemented by software and necessary general-purpose hardware or may be implemented by hardware, but the former is a preferred implementation in many cases. Based on this understanding, technical solutions of the present application may be essentially embodied in the form of a software product. The software product in a computer may be stored in a computer-readable storage medium such as a floppy disk, a read-only memory (ROM), a random-access memory (RAM), a flash memory, a hard disk or an optical disc in the computer and includes several instructions for enabling a computer device (which may be a personal computer, a server or a network device) to perform the method of the embodiments of the present application.

It is to be noted that units and modules included in the preceding embodiment of the apparatus are divided according to functional logic, and the division is not limited to this as long as the corresponding functions can be implemented. Additionally, the specific names of function units are used for distinguishing between each other and are not to limit the scope of the present application.

It is to be understood by those of ordinary skill in the art that some or all operations of the preceding method and function modules/units in the preceding apparatus or device may be implemented as software, firmware, hardware, and suitable combinations thereof.

In the hardware implementation, the division of the functional modules/units mentioned in the above description may not correspond to the division of physical components. For example, one physical component may have several functions, or one function or operation may be executed jointly by several physical components. Some or all physical components may be implemented as software executed by a processor such as a central processing unit, a digital signal processor, or a microprocessor, may be implemented as hardware, or may be implemented as integrated circuits such as application-specific integrated circuits. The corresponding software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules, or other data). The computer storage media include a RAM, a ROM, an electrically erasable programmable read-only memory (EEPROM), a flash memory, or other memory technologies, a compact disc read-only memory (CD-ROM), a digital versatile disc (DVD) or other optical disc memories, magnetic cassettes, magnetic tapes, magnetic disk memories or other magnetic storage apparatuses, or any other medium used for storing the desired information and accessible by a computer. Additionally, as is known to those having ordinary skill in the art, the communication media generally include computer-readable instructions, data structures, program modules, or other data in carriers or in modulated data signals transported in other transport mechanisms and may include any information delivery medium.

**Claims**

1. A channel information feedback method, comprising:

   determining a measurement result of channel state information according to a measured reference signal;
   determining a codebook, wherein the codebook comprises at least one codeword;
   determining a codeword in the codebook according to the measurement result; and
   feeding back indication information of the codeword, wherein the codeword is composed of basic codeword blocks, and at least one of the basic codeword blocks is represented as follows:

$$\tilde{\mathbf{v}} = \begin{bmatrix} \alpha_0 \mathbf{v}_0 \\ \alpha_1 \mathbf{v}_1 \\ \vdots \\ \alpha_{K-1} \mathbf{v}_{K-1} \end{bmatrix};$$

wherein a coefficient $\alpha_k$ is a complex scalar, a sub-vector $\mathbf{v}_k$ is a complex vector, and $k \in \{0,1,...,K\text{-}1\}$; $K$ is an integer greater than 1; and
the indication information comprises at least sub-vector indication information indicating the sub-vector $\mathbf{v}_k$.

2. The method according to claim 1, wherein the sub-vector indication information comprises at least first sub-vector indication information and second sub-vector indication information, at least one sub-vector $\mathbf{v}_k$ constituting the basic codeword blocks is determined according to the first sub-vector indication information, and at least one other sub-vector $\mathbf{v}_j$ constituting the basic codeword blocks is jointly determined according to the first sub-vector indication information and the second sub-vector indication information, wherein $j \in \{0,1,...,K\text{-}1\}$ and $j \neq k$.

3. The method according to claim 1, wherein the sub-vector indication information comprises at least a linear function indication parameter, wherein the linear function indication parameter indicates a linear function with respect to $k$ satisfied by a parameter of the sub-vector $\mathbf{v}_k$.

4. The method according to claim 2, wherein a plurality of sub-vectors $\mathbf{v}_k$ constitute a sub-vector set $V$, a first sub-vector set $V_1$ is determined in the sub-vector set $V$ according to the first sub-vector indication information, a second sub-vector set $V_2$ is determined in the first sub-vector set $V_1$ according to the second sub-vector indication information, the second sub-vector set is a proper subset of the first sub-vector set, and the first sub-vector set is a subset of the sub-vector set.

5. The method according to claim 2, wherein a plurality of sub-vectors $\mathbf{v}_k$ constitute a sub-vector set $V$, and an $X$-th sub-vector set $V_X$ is determined in an $(X\text{-}1)$-th sub-vector set $V_{X-1}$ according to X-th sub-vector indication information, wherein $X$ is a positive integer less than or equal to $K\text{-}1$, and in a case where $X$ is equal to 1, the $(X\text{-}1)$-th sub-vector set $V_{X-1}$ is the sub-vector set $V$, and the $X$-th sub-vector set $Vx$ satisfies the following relationship:

$$V_X \subseteq V_{X-1} \cdots \subseteq V_2 \subseteq V_1 \subset V;$$

wherein $\subseteq$ denotes a proper subset relationship, $\subset$ denotes a subset relationship, and $X$ is a positive integer.

6. The method according to claim 5, wherein a plurality of $X$-th sub-vector sets $V_X$ conform to the following relationship:

$$V_1 = V = \{\mathbf{v}_0, \mathbf{v}_1,..., \mathbf{v}_{K-1}\}, \quad V_2 = \{\mathbf{v}_1,..., \mathbf{v}_{K-1}\}, ..., \quad V_K = \{\mathbf{v}_{K-1}\}.$$

7. The method according to claim 2, wherein at least one coefficient $\alpha_k$ of the basic codeword blocks is determined according to first coefficient indication information, and at least one other coefficient $\alpha_j$ of the basic codeword blocks is jointly determined according to the first coefficient indication information and second coefficient indication information.

8. The method according to claim 2, wherein a plurality of coefficients $\alpha_k$ constitute a coefficient set $A$, a first coefficient set $A_1$ is determined in the coefficient set $A$ according to first coefficient indication information, a second coefficient set $A_2$ is determined in the first coefficient set $A_1$ according to second coefficient indication information, the second coefficient set $A_2$ is a proper subset of the first coefficient set $A_1$, and the first coefficient set $A_1$ is a subset of the coefficient set $A$.

9. The method according to claim 2, wherein a plurality of coefficients $\alpha_k$ constitute a coefficient set $A$, and an $X$-th coefficient set $A_X$ is determined in an $(X\text{-}1)$-th coefficient set $A_{X-1}$ according to $X$-th coefficient indication information, wherein $X$ is a positive integer less than or equal to $K$-1, and in a case where $X$ is equal to 1, the $(X\text{-}1)$-th coefficient set $A_{X-1}$ is the coefficient set $A$, and the $X$-th coefficient set $A_X$ satisfies the following relationship:

$$A_X \subseteq A_{X-1} \cdots \subseteq A_2 \subseteq A_1 \subset A \; ;$$

wherein $\subseteq$ denotes a proper subset relationship, $\subset$ denotes a subset relationship, and $X$ is a positive integer.

10. The method according to claim 9, wherein a plurality of $X$-th coefficient sets $A_X$ conform to the following relationship:

$$A_1 = A = \left\{\alpha_0, \alpha_1, \ldots, \alpha_{K-1}\right\}, \quad A_2 = \left\{\alpha_1, \ldots, \alpha_{K-1}\right\}, \ldots, \quad A_K = \left\{\alpha_{K-1}\right\}.$$

11. The method according to claim 2 or 3, wherein the sub-vector $\mathbf{v}_k$ in the basic codeword blocks is represented as follows:

$$\mathbf{v}_k = \left[ 1, e^{j\frac{2\pi m_k}{OL_k}}, \ldots, e^{j\frac{2\pi m_k (L_k - 1)}{OL_k}} \right]^{\mathrm{T}} ;$$

wherein a value of $m_k$ is determined according to the sub-vector indication information of the indication information, $L_k$ denotes a sub-vector dimension, and $O$ is a preconfigured real number.

12. The method according to claim 2, wherein the sub-vector $\mathbf{v}_k$ in the basic codeword blocks is represented as follows:

$$\mathbf{v}_k = \mathrm{vec}\left( \mathbf{x}_k \otimes \mathbf{y}_k \right)$$

$$\mathbf{x}_k = \left[ 1, e^{j\frac{2\pi m_k}{O_1 L_{1,k}}}, \ldots, e^{j\frac{2\pi m_k (L_{1,k} - 1)}{O_1 L_{1,k}}} \right]^{\mathrm{T}}$$

$$\mathbf{y}_k = \left[ 1, e^{j\frac{2\pi n_k}{O_2 L_{2,k}}}, \ldots, e^{j\frac{2\pi n_k (L_{2,k} - 1)}{O_2 L_{2,k}}} \right]^{\mathrm{T}} ;$$

wherein $m_{1,k}$ and $m_{2,k}$ are determined according to the sub-vector indication information of the indication information, $L_{1,k}$ and $L_{2,k}$ denotes sub-vector dimensions, $O_1$ and $O_2$ are preconfigured real numbers, $\otimes$ denotes Kronecker product, and vec denotes a vectorized operation of rearranging a matrix into a column vector.

13. The method according to claim 2, wherein the sub-vector $\mathbf{v}_k$ in the basic codeword blocks comprises:

$$\mathbf{v}_k = \left[ 1, e^{j\pi(m_{1,k} + m_{2,k})}, e^{j\pi(2m_{1,k} + 4m_{2,k})}, \ldots, e^{j\pi\left((L_k - 1)m_{1,k} + (L_k - 1)^2 m_{2,k}\right)} \right]^{\mathrm{T}} ;$$

wherein $m_{1,k}$ and $m_{2,k}$ are determined according to the sub-vector indication information of the indication information, and $L_k$ denotes a sub-vector dimension.

14. The method according to claim 2, wherein the coefficient $\alpha_k$ in the basic codeword blocks is $\alpha_k = e^{j\frac{2\pi g_k}{G}}$, wherein

$g_k$ is determined according to feedback coefficient indication information, and $G$ is a preconfigured real number.

15. The method according to claim 2, wherein different sub-vectors $\mathbf{v}_k$ have a same length, and a number $K$ of sub-vectors and a sub-vector dimension are determined based on pre-agreement or preconfiguration.

16. The method according to claim 2, wherein different sub-vectors $\mathbf{v}_k$ have different lengths, and a number $K$ of sub-vectors and a sub-vector dimension are determined based on pre-agreement or preconfiguration.

17. The method according to claim 11, wherein the linear function indication parameter indicates the linear function of $k$ satisfied by the value of the parameter $m_k$ of the sub-vector $\mathbf{v}_k$.

18. The method according to claim 11, wherein the first sub-vector indication information and the second sub-vector indication information indicate the value of the parameter $m_k$ of the sub-vector $\mathbf{v}_k$.

19. An electronic device, comprising:

   at least one processor; and
   a memory configured to store at least one program;
   wherein the at least one program, when executed by the at least one processor, causes the at least one processor to perform the channel information feedback method according to any one of claims 1 to 19.

20. A computer-readable storage medium storing at least one program which, when executed by at least one processor, causes the at least one processor to perform the channel information feedback method according to any one of claims 1 to 19.

**FIG. 1**

**FIG. 2**

301

Codebook

301

Information | Codeword

**FIG. 3**

40

**FIG. 4**

## INTERNATIONAL SEARCH REPORT

| International application No. |
|---|
| **PCT/CN2023/134207** |

| A. | CLASSIFICATION OF SUBJECT MATTER |
|---|---|

H04B 7/0456(2017.01)i

According to International Patent Classification (IPC) or to both national classification and IPC

| B. | FIELDS SEARCHED |
|---|---|

Minimum documentation searched (classification system followed by classification symbols)

IPC: H04B,H04W

Documentation searched other than minimum documentation to the extent that such documents are included in the fields searched

Electronic data base consulted during the international search (name of data base and, where practicable, search terms used)

CNTXT, CNKI, DWPI, ENTXT, ENTXTC, VEN, 3GPP: 信道状态信息, 码本, 码字, 参考信号, 指示, 向量, 矢量, 测量, 结果, CSI, codebook, codeword, RS, indicat+, vector, measurement, result

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 104811231 A (CHINA ACADEMY OF TELECOMMUNICATIONS TECHNOLOGY) 29 July 2015 (2015-07-29) description, paragraphs [0002]-[0041], and figures 1-9 | 1-10, 15-16, 19-20 |
| X | US 2018083683 A1 (SAMSUNG ELECTRONICS CO., LTD.) 22 March 2018 (2018-03-22) description, paragraphs [0041]-[0068], and figures 3-4 | 1-10, 15-16, 19-20 |
| A | WO 2022061782 A1 (GUANGDONG OPPO MOBILE TELECOMMUNICATIONS CORP., LTD.) 31 March 2022 (2022-03-31) entire document | 1-20 |
| A | WO 2023011570 A1 (HUAWEI TECHNOLOGIES CO., LTD.) 09 February 2023 (2023-02-09) entire document | 1-20 |
| A | ETRI. "Feedback Enhancements for Beamformed CSI-RS Based Schemes" *3GPP TSG RAN WG1 Meeting #81. R1-153006,* 29 May 2015 (2015-05-29), entire document | 1-20 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 January 2024** | **31 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/134207**

| Patent document cited in search report | | | Publication date (day/month/year) | Patent family member(s) | | | Publication date (day/month/year) |
|---|---|---|---|---|---|---|---|
| CN | 104811231 | A | 29 July 2015 | None | | | |
| US | 2018083683 | A1 | 22 March 2018 | KR | 20160117253 | A | 10 October 2016 |
| | | | | WO | 2016159675 | A1 | 06 October 2016 |
| WO | 2022061782 | A1 | 31 March 2022 | CN | 116097718 | A | 09 May 2023 |
| WO | 2023011570 | A1 | 09 February 2023 | CN | 115706634 | A | 17 February 2023 |

Form PCT/ISA/210 (patent family annex) (July 2022)